Europäisches Patentamt

**European Patent Office**

**Office européen des brevets**

(11) Numéro de publication: **0 043 755**
**A1**

## (12) DEMANDE DE BREVET EUROPEEN

(21) Numéro de dépôt: **81401026.0**

(22) Date de dépôt: **26.06.81**

(51) Int. Cl.³: **B 64 C 25/50**

(30) Priorité: **27.06.80 FR 8014313**

(43) Date de publication de la demande: **13.01.82**
**Bulletin 82/2**

(84) Etats contractants désignés: **DE GB IT**

(71) Demandeur: **MESSIER-HISPANO-BUGATTI (S.A), 5, rue Louis Lejeune, F-92120 Montrouge (FR)**

(72) Inventeur: **Masclet, Jean, 11 Boulevard Davout, F-75020 Paris (FR)**
Inventeur: **Turiot, André, 77 Ave de l'Escadrille N. Niemen, F-91390 Morsang s/Orge (FR)**

(74) Mandataire: **Flavenot, Bernard, Société S.E.D.I.C. 40 rue Victor Basch, F-92120 Montrouge (FR)**

(54) **Train d'atterrissage relevable et orientable pour aéronef.**

(57) Le train d'atterrissage selon l'invention comprend une jambe (1) supportant au moins une roue (10), un amortisseur (12) disposé dans un logement (14) de la jambe (1), une partie (15) coopérant avec l'amortisseur (12), cette partie (15) émergeant de la jambe (1), des moyens pour commander la rotation de la jambe (1) autour d'un axe longitudinal et se caractérise par le fait que les moyens pour commander la rotation de la jambe (1) sont situés dans une cartouche (18) recouvrant la jambe et entourant la partie émergente (15).

Application à la commande de direction d'un train d'atterrissage.

TRAIN D'ATTERRISSAGE RELEVABLE ET ORIENTABLE
POUR AERONEF

1 .

La présente invention concerne un train d'atterrissage
relevable et orientable pour aéronef, et plus particulièrement destinée aux atterrisseurs avants munis d'une
commande de direction.

La commande de direction des atterrisseurs avants est
souvent incorporée dans le caisson renfermant la jambe
et l'amortisseur du train avant. De ce fait, cette
commande est difficile d'accès, et cela nécessite, lors
de la maintenance ou le changement d'un ou plusieurs
organes, le démontage d'éléments n'appartenant pas à
cette commande.

La présente invention a pour but de pallier cet inconvénient en proposant pour cela un train d'atterrissage
ayant une commande de direction facilement accessible
et interchangeable.

Plus particulièrement, la présente invention a pour
objet un train d'atterrissage relevable et orientable
pour aéronef comprenant une jambe supportant une roue,
un amortisseur disposé dans un logement de la jambe dont
une partie émerge de la jambe, des moyens de liaison
de l'amortisseur avec la jambe, des moyens pour commander la rotation de la jambe sensiblement autour d'un
axe longitudinal, caractérisé par le fait que les moyens
pour commander la rotation de la jambe sont situés dans
une cartouche recouvrant la jambe et entourant la partie émergente.

L'invention sera mieux comprise à l'aide d'un exemple
particulier de réalisation qui sera à présent décrit
à titre non limitatif en référence aux figures en
annexe dans lesquelles :

2

- la figure 1 représente schématiquement en vue de face un train d'atterrissage muni de sa commande de direction selon l'invention,

- la figure 2 représente en coupe longitudinale le train d'atterrissage suivant un plan de coupe I-I de la figure 1.

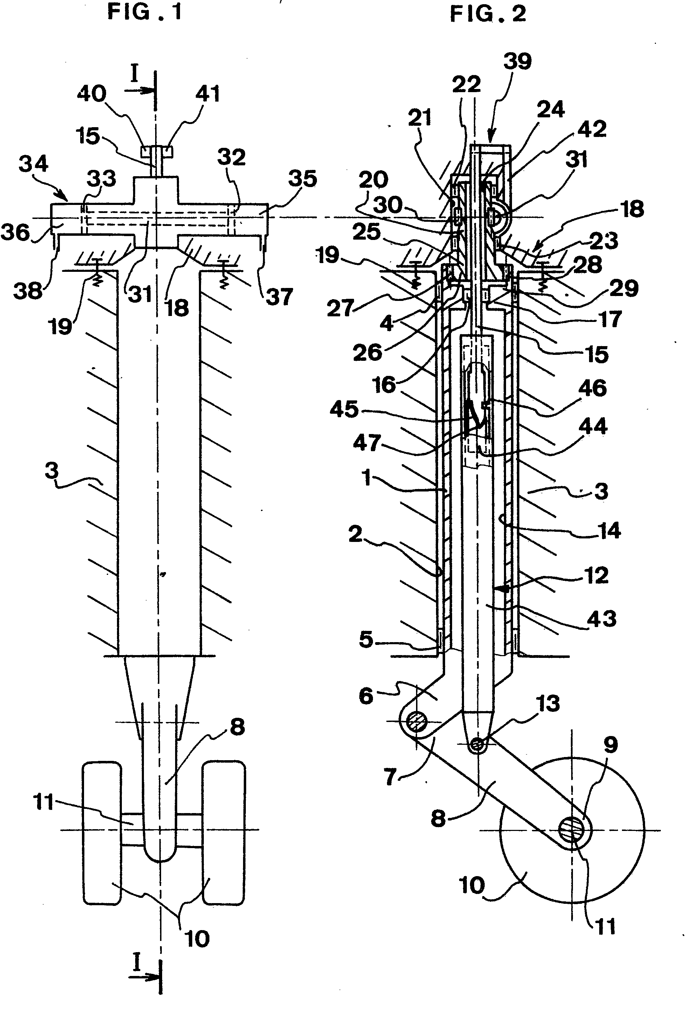

En référence à ces figures 1 et 2, le train d'atterrissage selon l'invention comprend une jambe 1 montée en rotation dans un alésage 2 d'un caisson 3 au moyen de deux paliers 4 et 5.

La jambe 1 est reliée à son extrémité coudée 6 à une extrémité 7 d'un balancier 8 qui comporte par son autre extrémité 9 une ou plusieurs roues 10 montées autour d'un essieu 11.

L'extrémité d'un amortisseur 12 se rattache au balancier 8 au moyen d'un axe 13. Cet amortisseur 12 est disposé dans un logement 14 situé à l'intérieur de la jambe 1. Une tige 15 liée à l'amortisseur 12 émerge de la jambe 1 et s'articule dans une rotule 16 disposée dans un épaulement interne 17 de la jambe 1. Cette rotule 16 permet ainsi à l'amortisseur 12 de se débattre d'un certain angle par rapport à l'axe longitudinal de la jambe 1 lors de l'atterrissage et du roulage au sol de l'aéronef.

Une cartouche 18 renferme des moyens pour commander la rotation de la jambe 1, et est fixée sur le caisson 3 par des moyens de fixation tels que des vis 19, représentées schématiquement sur les figures 1 et 2, et enveloppe la tige 15 émergente de l'amortisseur 12.

Un arbre de commande de direction 20 est monté en rotation dans l'alésage 21 de la cartouche 18 au moyen de deux paliers 22 et 23. Cet arbre est percé d'un

3

canal central 24 permettant ainsi le passage de la
tige 15.

L'extrémité 25 de l'arbre 20 comporte une embase 26
dont la périphérie est conformée en une denture d'engrenage 27 coopérant avec une denture d'engrenage intérieure 28 complémentaire usinée dans l'extrémité
29 de la jambe 1 ; de cette manière, l'arbre 20 et
la jambe 1 sont liés en rotation par l'intermédiaire
d'un système d'engrenage 27,28.

De plus, une seconde denture 30 est usinée sur la pé-
.riphérie de l'arbre 20 au voisinage de son milieu et
coopère avec une crémaillère 31. Les extrémités de la
crémaillère 31 sont identiques et sont conformées
en une couronne annulaire en saillie 32 et 33 coulissant avec étanchéité dans un cylindre 34.

Ces deux couronnes annulaires 32 et 33 définissent
avec le cylindre 34 deux chambres hydrauliques 35 et
36 disposées respectivement à chaque extrémité du
cylindre 34 ; ces deux chambres 35 et 36 étant respectivement alimentées par une conduite 37 et 38 provenant d'une source hydraulique non représentée sur
les figures.

L'extrémité de la tige 15 émergente de la cartouche
18 est munie d'une fourchette 39 clavetée sur la tige
15. Cette fourchette est constituée de deux bras 40,
41, venant se positionner autour d'un axe 42 solidaire d'une partie fixe telle que la cartouche 18.

L'amortisseur 12 comprend un cylindre 43 coulissant
avec étanchéité vis-à-vis de la tige 15 dont l'extrémité 44 est d'un diamètre supérieur et comporte
en regard du restant de la tige 15, une encoche 45
en forme par exemple de V disposé de telle façon que

4

la direction passant par l'axe de la tige 15 et la pointe 47 du V soit dans l'axe longitudinal de l'aéronef. De plus, l'intérieur du cylindre 43 est équipé d'un téton 46 coopérant dans l'encoche 45.

Ce dispositif permet de ramener la ou les roues 10 de l'aéronef, lors de son décollage, dans l'axe longitudinal de celui-ci. En effet, suite à un décollage en courbe de l'aéronef, les roues 10 peuvent se trouver légèrement braquées, donc l'ensemble balancier 8, jambe 1 et cylindre 43 de l'amortisseur 12 également.

Lorsque l'atterrisseur avant quitte le sol, l'amortisseur 12 se détend alors, et, de ce fait, le cylindre 43 se déplace par rapport à la tige 15 qui est fixe. Le téton 46, lié au cylindre 43 positionné dans l'encoche 45, à un moment donné, vient en contact avec le bord de cet encoche 45 et par la pression de détente de l'amortisseur 12, le téton 46 suit ce bord jusqu'à la pointe 47 du V en entraînant avec lui le balancier 8 et par conséquent les roues 10 de l'atterrisseur qui se présente lors de la rentrée du train, dans un plan parallèle à l'axe longitudinal de l'aéronef puisque la pointe 47 du V se trouve située dans cet axe longitudinal.

La commande de direction de l'atterrisseur fonctionne de la façon suivante.

On suppose que l'on veut commander l'orientation de l'aéronef quand il roule sur la piste. Si on veut tourner par exemple vers la gauche dans le cas de la figure, un fluide hydraulique est envoyé au moyen de la conduite 38 dans la chambre 36 du cylindre 34. Sous l'action de la pression s'exerçant sur la face de la

0043755

5

couronne annulaire 33 de la crémaillère 31, cette dernière se déplace et entraîne par l'intermédiaire de sa denture, la denture 30 usinée sur la périphérie de l'arbre 20. Ce dernier commence sa rotation en entraînant avec lui la jambe 1 de l'atterrisseur par l'intermédiaire de l'engrenage 27 et 28 ; au moyen du balancier 8 lié à l'extrémité coudée 6 de la jambe, le ou les roues sont orientées dans la direction voulue.

L'envoi du fluide dans la chambre 35 du cylindre provoque les mêmes opérations avec une cinématique inverse des diverses dentures ainsi qu'une orientation inverse du ou des roues, et on obtient dans ce cas une possibilité de tourner vers la droite.

L'avantage d'un tel dispositif de commande de direction réside dans le fait qu'il est facilement accessible et interchangeable très rapidement ; en effet, il suffit pour le remplacer et/ou pour l'entretenir de ne retirer que les vis de fixation 19 du caisson 3.

6

R E V E N D I C A T I O N S

1/ Train d'atterrissage relevable et orientable pour aéronef comprenant une jambe (1) supportant au moins une roue (10), un amortisseur (12) disposé dans un logement (14) de ladite jambe (1), une partie (15) coopérant avec ledit amortisseur (12) émergeant de ladite jambe (1), des moyens de liaison dudit amortisseur (12) avec ladite jambe (1), des moyens pour commander la rotation de ladite jambe (1) sensiblement autour d'un axe longitudinal, caractérisé par le fait que lesdits moyens pour commander la rotation de ladite jambe (1) sont situés dans une cartouche (18), recouvrant ladite jambe (1) et entourant ladite partie émergente (15).

2/ Train d'atterrissage selon la revendication précédente, caractérisé par le fait que la cartouche (18) comporte des moyens de fixation à un caisson (3) solidaire dudit aéronef.

3/ Train d'atterrissage selon l'une des revendications précédentes, caractérisé par le fait que lesdits moyens pour commander la rotation de la jambe (1), comprennent un arbre de commande de direction (20) coopérant, d'une part, avec une crémaillère (31) et, d'autre part, avec ladite jambe (1) au moyen d'un engrenage (27,28).

4/ Train d'atterrissage selon l'une des revendications précédentes, caractérisé par le fait que lesdits moyens de liaison dudit amortisseur (12) avec ladite jambe (1) comprennent une rotule (16) disposée dans un épaulement (17) de la jambe (1), une extrémité (6) de la jambe (1) fixée à un balancier (8) recevant une extrémité de l'amortisseur (12).

FIG.1   FIG.2   0043755

Office européen des brevets

**RAPPORT DE RECHERCHE EUROPEENNE**

0043755

Numéro de la demande

EP 81 40 1026

| | DOCUMENTS CONSIDERES COMME PERTINENTS | | CLASSEMENT DE LA DEMANDE (Int. Cl.³) |
|---|---|---|---|
| **Catégorie** | Citation du document avec indication, en cas de besoin, des parties pertinentes | Revendica-tion concernée | |
| | FR - A - 1 094 862 (MORANE-SAUL-NIER)<br><br>  * En entier *<br><br>-- | 1,3,4 | B 64 C 25/50 |
| | GB - A - 1 416 806 (DOWTY ROTOL LTD)<br><br>  * En entier *<br><br>-- | 1,3,4 | |
| A | US - A - 2 651 385 (W.H. CLARK et al.) | 1 | **DOMAINES TECHNIQUES RECHERCHES (Int. Cl.³)** |
| A | FR - A - 859 585 (E. MERCIER) | 1 | B 64 C |
| A | US - A - 3 904 153 (J. WATTS)<br><br>---- | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 07-10-1981 | CINQUANTINI |

OEB Form 1503.1  06.78